# EUROPEAN PATENT SPECIFICATION

(11) **EP 2 720 588 B1**
(45) Date of publication and mention of the grant of the patent: **30.12.2015**
(21) Application number: 12737350.4
(22) Date of filing: 19.06.2012
(51) Int. Cl.: A47J 36/24

(54) **THERMO PLATE**
THERMOPLATTE
ASSIETTE CHAUFFANTE

(30) Priority: 20.06.2011 IT PD20110206
(43) Date of publication of application: 23.04.2014
(73) Proprietor: Marcato, Roberto, 35141 Padova (PD) (IT); ITALIMPIANTI Limited, MLH1321 Mellieha (MT)
(72) Inventor: MARCATO, Roberto, 35141 Padova (PD) (IT)
(86) International application number: PCT/IB2012/053090
(87) International publication number: WO 2012/176121

(56) References cited:
- WO-A1-2011/066618
- DE-A1- 10 107 922
- GB-A- 191 023 695
- US-A1- 2003 116 560
- US-A1- 2009 188 909
- US-B1- 6 350 972

## Description

The plate of the invention is to be used in the catering industry in general, in particular replacing plates for serving cooked food, allowing customers to eat meals that stay hot for longer periods. Any extension of the term plate to each type of known container used in the sector for keeping and maintaining cooked food hot for long periods is anticipated.

### Prior art

The greatest inconvenience for a customer in a pizza restaurant, for example, is not being able to finish eating the pizza without it getting so cold that it has lost most of its flavour. This obvious example is symptomatic of any type of catering that has, as is known, these same problems.

This drawback is obviously of a physical nature, and can be perfectly explained on the basis of the principles of thermodynamics.

For example, the drop in the temperature of the dish already starts with the preparation of the dish, namely when the food is taken out of the area where it has been cooked, and because it is hotter it gives off heat to the surrounding environment and to the plate itself.

The speed of the heat transmission, and therefore the time for the dish to cool, is influenced by numerous heat exchange coefficients and by the variation of these coefficients themselves in relation to the mass and the form of the food.

The plate, which is normally ceramic, will not tend to absorb much heat, given that ceramic has a low thermal capacity, but undoubtedly it will absorb heat during the time of the meal. At the end of the meal, in fact, the plate will be tepid (ceramic is an insulator), while the food will be much colder than when it first arrived.

The most promising technique for preventing the above-mentioned inconvenience is to preheat the plates with the intention of keeping the food hot for as long as possible.

Nevertheless, for this method to have any appreciable results it would be necessary to heat the plate to a very high temperature, making it impossible for the waiter to carry it.

Another attempt carried out in the past was to increase the thermal capacity of the plates.

Very thick plates are well known, that thanks to their mass have a relatively high thermal inertia.

Compared to thinner plates, which have a very modest and almost irrelevant thermal capacity, very thick plates are highly regarded, even if quite cumbersome and difficult to handle because they allow the customers in a restaurant to postpone the food cooling times.

These very thick plates need to be put in a warm area beforehand, and only after quite a long time, because of their modest thermal conductivity, can they be used. Naturally, because the material is homogeneous they have the drawback of heating up especially on the edges, and also on the bottom, therefore it is not easy to handle them when preparing the food courses and serving the customer. They cannot be carried at a temperature that is too high because the temperatures that could be reached on the edges might burn the customers' hands.

In the past there were attempts to make materials with a high thermal capacity, but with poor results especially given the very high production costs.

Another drawback of these types of plates made of special materials with a high

In fact, because they have to be heated in a homogeneous manner but with modest thermal conductivity, they have to be placed in a very hot area for some time before their preparation.

Another experiment, which did not have the desired success, was the realisation of composite plates. With a bottom made of a material with a high thermal capacity, combined with a plate above it.

The difficulty of holding such plates is clear. In fact the base heats up much more than the plate, and most of the stored heat tends to disperse in all the other directions with respect to the food on top.

This composite plate was immediately abandoned because of the danger of scalding.

Other examples of composite plates were abandoned following various experiments, since the fixing of the base made of a material with a high thermal capacity to a plate on top, especially if made of ceramic or porcelain, led to the immediate breaking of the ceramic or porcelain plate after the initial heating.

A thermoplate comprising an induction insert is known from US2009/188909.

### Disclosure of the invention - Technical Problem

The main object of the present invention concerns a plate that can retain heat for a long time, or at least at acceptable levels until the food served on top of it has been consumed.

Another object of this invention concerns a plate that can be quickly heated up. A further object of this invention concerns a plate where, also when heated, the temperature of its edges always remains at acceptable levels and never with the danger of burning someone.

An even further object of this invention concerns a plate that can easily be handled by restaurant staff, and therefore also the bottom will always be at an acceptable temperature.

A further object of this invention concerns a plate that on the outside looks just like a normal plate.

An additional object of this invention concerns a plate that is completely reliable also in the light of innumerable heating cycles, and which can withstand the thermal shocks of industrial dishwashers.

A further object of this invention concerns the effective transmission of the heat to the bottom of the plate, which should occur in an efficient manner.

An even further object of this invention concerns the means, which when heated transmit the heat to the bottom of the plate, whose configuration and structure has been developed so as to achieve and/contribute to one or more of the objectives described above.

### Solution to Problem - Technical Solution

All the above-mentioned aims are met with the improved thermo plate as defined in its essential characteristics in the claims.

### Advantageous Effects of the invention

All the above-mentioned drawbacks are overcome by the improved thermo plate that is the object of this invention.

All the above-mentioned objects, and others that will be set out later in the description, are attained with the improved thermo plate that is the object of the invention.

The invention concerns a thermo plate that has a metal foil sheet placed in thermal contact with the bottom of a plate, enclosed in its own cavity.

In particular the plate is a normal ceramic or porcelain plate on whose top surface is directly put the food to be kept hot.

The lower part of this plate, and in particular the central part, and therefore with the exclusion of its edges, is covered by metal foil.

Beneficially said metal foil sheet is joined solidly to the bottom of the plate using a high temperature silicone adhesive.

In fact, just the solid joining of this metal foil allows for the transmission of heat via conduction in any condition of use, since a foil sheet, particularly if heated to a high temperature, tends to deform, taking on a form that is far removed and different from the one with a flat and continuous layout that it has at room temperature.

These deformations involve a detachment and distancing from the bottom of the plate, impeding the transmission of the heat via conduction from the foil sheet to the bottom of the plate. There is therefore a clear deterioration of the characteristics related to the aims that have been set, and also with other serious drawbacks.

Sometimes these deformations can lead to the plate itself breaking.

For this reason it is essential that the metal foil is placed against, and held solidly against, the bottom of a plate with an adhesive that is also a good thermal conductor.

It is equally essential that this adhesive is not rigid but allows, thanks to its elastic modulus, expansion movement between the plate and the foil after thermal expansion, especially the thermal expansion of the metal foil at a high temperature.

As is well known, the linear coefficient of thermal expansion of metal foil is about 12 mm/m/°C, while that of porcelain is about 4mm/m/°C.

In fact, it should be borne in mind that the foil, during the heating phase, reaches a very high temperature, even up to about 250°, and very quickly, in just a few minutes, while the porcelain plate is heated by the heat transmitted from the foil over a much longer period.

The difference in expansion of the two materials, the metal foil and the porcelain, can therefore also be in the order of a few tenths to 1 mm for a normal plate of 15-20 cm in diameter.

It is clear that for large plates, like those used for pizzas, which can be up to 34-40 cm, this difference in expansion is greatly increased, up to the order of 2-3 mm.

These differences in linear expansion, if not properly absorbed/countered by the adhesive, lead to the inevitable breaking of the porcelain.

Therefore the adhesive has to have a degree of elasticity that provides an elongation of at least 150 %.

We should also add that a foil sheet, composed of a single element and not properly configured, of the dimensions roughly corresponding or lightly less than the bottom of the plate, even if joined to the bottom of a porcelain plate using a high temperature silicone adhesive, would not succeed in achieving the desired objectives.

In fact the deformations of a metal foil with the thickness of a few tenths of a millimetre to several millimetres, configured as a single flat element, like a circular disk, brought to a high temperature of about 250°, has a thermal expansion of the surface variety, namely according to the diameter and according to the various circumferences.

It is clear that a high temperature silicone adhesive, even the type described above, with an elasticity modulus that provides stretching also of over 150 %, would not be capable of adapting to these deformations.

It is therefore necessary that the configuration of the metal foil can minimise these deformations, especially the deformations due to surface thermal expansion, and above all that it can remain attached to the bottom of the plate even during these deformations, held by said silicone adhesive.

For this reason the foil sheet is configured as a circle with through-grooves, or cuts, that go from the edge towards the centre and/or a central hole towards the edges, where said cuts cover almost the entire expanse of said circle. Beneficially there is an alternate arrangement of these cuts that go from the edge towards the centre and from the centre hole towards the edge.

In this way the metal foil with this configuration is free to expand, minimising the surface thermal expansion, and subject to a linear thermal expansion only for half of the diameter of the circle, held by the silicone adhesive used only at certain points or two or more circumferences, preferably from 2 to 5.

One or more of the above-mentioned characteristics of the composite plate are described in the following list of beneficial aspects that characterise the metal foil.

Beneficially, said metal foil is positioned on the top part of the cavity and not in contact with, but at a some distance from, its bottom part.

Preferably this cavity is made by attaching a base plate to the bottom of the plate, joined along the circumference.

A further benefit of this plate is that the foil incorporated in it is positioned centrally and does not affect its edges.

Another quality of this plate is that it can be heated up via induction.

A further benefit of this foil is that it is solidly attached to the bottom of the plate only in limited areas, leaving the remaining parts without any constrictions and therefore free to thermally expand in a different way to the support. Conveniently said foil is in the shape of a disk.

This disk has the added benefit of having the shape of an annular ring.

Another benefit of this foil is that the cross section, corresponding to the cross section of the bottom of the plate, has through-grooves, or cuts, that allow thermal expansion to take place.

An additional benefit of these grooves is that they are configured in an alternating manner starting from the centre and starting from the edge, further facilitating said thermal expansions.

### Brief description of the drawings

The technical characteristics of the invention, according to the above-mentioned objectives, can clearly be found in the content of the claims below and the benefits will be more evident in the detailed description that follows, made with reference to the attached diagrams, which represent only an example of one possible embodiment, where:

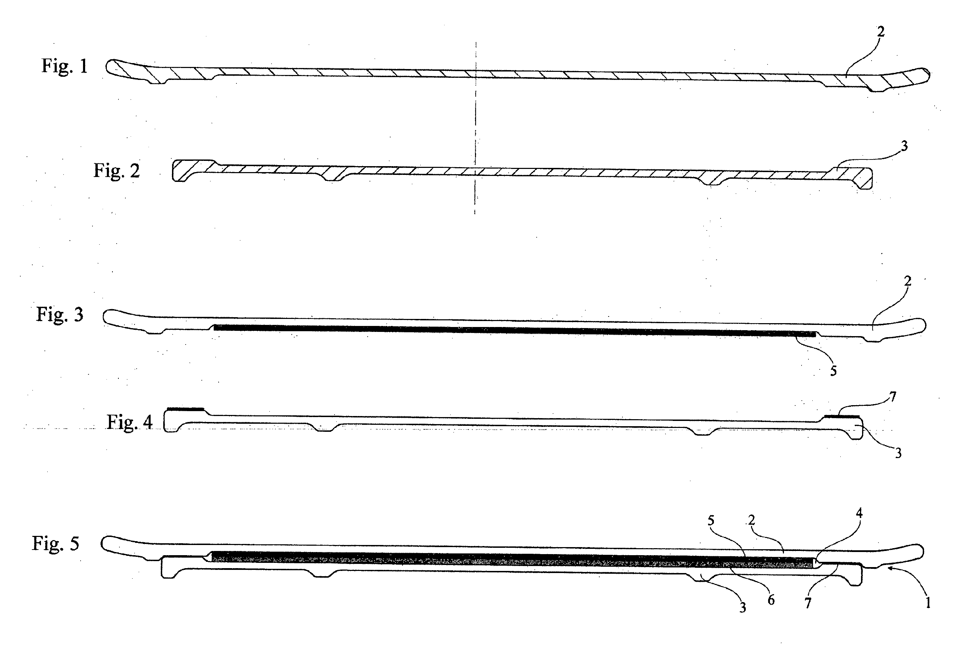

fig. 1 shows a cross-section diameter of the top part of the improved thermo plate;
fig. 2 shows the base plate of the improved thermo plate according to a cross-section of the diameter;
fig. 3 shows the top part of the plate of fig. 1 with a metal foil on the bottom;
fig. 4 shows the base plate of fig. 2 with the solder paste along the top circumferential edge.
fig. 5 shows a cross-section of the improved thermo plate, showing the spacing between the base plate and the metal foil;
figs. 6, 7 and 8 show an example of metal foil configured as an annular ring having cuts or through-grooves with an alternate arrangement from the centre and from the edge.

### Best mode for carrying out the invention

The thermo plate 1, the object of the invention, is composed essentially of three parts:
a top plate 2, joined to a base plate 3, that creates a cavity 4 inside which there is a sheet of metal foil 5.

The top plate 1 and the base plate 3 can be made of normal ceramic or porcelain, which being materials with low thermal conductivity, retain the heat accumulated by the metal foil 5 for quite a long time and gradually release its heat in such a way that the food remains hot long enough to be eaten while still hot.

It is very important that the lower part of the top plate 2 is in close thermal contact with the metal foil 5, whereas it is sufficiently distanced from the base plate 3, in this way practically all the heat will be transmitted via conduction to the top plate 2 and the base plate 3 will remain practically cold.

This allows the desired aims to be attained, leaving the restaurant staff an easy job of handling the thermal plate 1 since its base plate 3 will never be hot enough to burn their hands.

Eventually, in order to further reduce the thickness of the thermal plate 1, a suitable thermal insulation layer 6 can be placed between the metal foil 5 and the base plate 3.

However, already with a distance of a few millimetres, from 2 to 4-5 mm, between the metal foil 5 and the base plate 3, even heating the metal foil to a temperature of around 250°, the base plate 3 is kept at a tolerable temperature for being handled by staff that need to hold the plate.

It can be seen that the form of the foil 5 that provides greater uniformity of heat on a circular plate is a circular form, and even more so an annular ring 8.

This annular ring conveniently has a series of through-grooves or radial cuts, 9, 10.

In this way you can avoid thermal shocks on the plate due to the different thermal expansion coefficients of the various materials.

We have been able to verify that the best arrangement for minimising the tensile states is that the annular ring 8 has said radial cuts in an alternating arrangement from the centre 9 and from the edge 10.

Contrary to what we might be led to believe, the best results are attained attaching said annular ring to the bottom surface of the plate only in limited areas of the annular ring, and in particular only in a limited central zone between two successive radial cuts.

A curved shape of these radial cuts with an alternating arrangement from the centre 12 and from the edge 11 minimises the thermal stresses on the plate of the metal foil 13.

Making the arrangement of these radial cuts more frequent, increasing the curvature of their profile, still with an alternating arrangement from the centre 14 and from the edge 15, improves the positive effect described above on the top part 2 of the thermo plate 1 of the metal foil sheet 16.

As set out in the presentation of the invention, a sheet of metal foil in the shape of a disk and without the above-mentioned cuts, heated to a high temperature of about 250° centigrade, with a thickness of just a few tenths of a millimetre to about 2-3 mm, tends to deform in accordance with a surface expansion coefficient, not in a planar fashion given the large dimensions of the diameter, corresponding to just less than the diameter of the base of the plate, but becoming humped and creating unpredictable waves.

These deformations cannot be controlled and have two negative effects: the separation from close contact with the bottom of the plate, and the establishment of thrust forces that can break the plate.

Separation from the lower part of the plate prevents the transmission of heat via conduction from the heated metal foil to the ceramic plate.

Not even an adhesive over the entire foil sheet, given the tensile state that can be reached, because of the surface thermal expansion coefficient, would resolve this drawback, therefore inevitably the plate would break.

In fact, even if the silicone adhesive is sufficiently elastic, reaching an elastic modulus that provides stretching of about 150%, it would not be capable of countering/adapting to these deformations, transferring part of these residual stresses to the plate, which would inevitably break because it is rigid.

It should be pointed out, in fact, that while the metal foil, especially when heated using induction, reaches the pre-set temperature, even 250° centigrade, in a very short time, from 1 to 5 minutes, the plate remains practically cold and only later does it heat up via the conduction of the heat transmitted by the already hot metal foil sheet.

Therefore the maximum variation in expansion is obtained between the already heated foil and the still cold plate.

Moreover, we should bear in mind that a large number of heating and cooling cycles, to which a plate is subjected to during normal use, could only accentuate this negative situation, leading quite soon to the destruction of the plate.

It is appropriate, then, that the metal foil sheet can expand and return to its initial configuration with every heating and cooling cycle, without stresses or retention due to the high temperature silicone adhesive.

In fact, only a configuration of the metal foil sheet with a numerous series of cuts starting from the central hole and/ starting from the edge and that covers almost the whole radius of the annular ring can prevent the above-mentioned deformations.

Preferably the arrangement of this series of cuts is of the alternating variety, starting from the central hole and from the edge and that covers almost the whole radius of the annular ring.

A metal foil sheet configured as an annular ring already allows the size of the surface expansion to be practically halved.

A metal foil sheet configured as a ring with numerous alternating cuts, with a span in the order of some tenths to some millimetres, which start from the centre hole and from the perimeter edge, and which cover almost the whole of said annular ring, allows only very modest deformations due to the surface expansion coefficient to be created, restricting the deformations to just those linear ones of each single sector of the annular ring due to the coefficient of linear thermal expansion.

Basically the overall number of cuts can vary from 8 to 48, and preferably between 16 and 32, and even better 24.

It is clear that these sizeable, but controllable, expansions should be absorbed by an appropriate adhesive that works together with the retention without transferring any dangerous tensile stresses to the plate.

This adhesion is only in certain points (from 2 to 8 points of about 1.5 to 0.5 cm) for each circular sector defined between two alternating cuts.

Or else, in a simpler manner and quicker to carry out, using some concentric circles of silicone adhesive, preferably from 2 to 5 appropriately spaced.

Said silicone adhesive is of the high temperature variety, atoxic and suitable for use with foodstuffs, and has the benefit of being able to be applied cold, and eventually could be bi-component in order to facilitate the assembly stage, kept pressed against the bottom until said adhesive has reached a level of hold that is sufficient for the purpose.

This silicone adhesive also allows you to compensate for any unevenness of a porcelain plate, which is almost always present, while always maintaining contact for transferring the heat via conduction.

In fact said silicone adhesive, such as Loctite, has good heat conduction, excellent resistance to the numerous heating cycles, up to 250°, while maintaining its elasticity.

In fact in the case where said adhesive loses its properties the plate would become unusable and might even break.

The sealing, preferably air tight between the base plate and the plate, especially to prevent water or the like entering during the continual washings, is realised with a continuous bead along the edge where the base plate and the plate join.

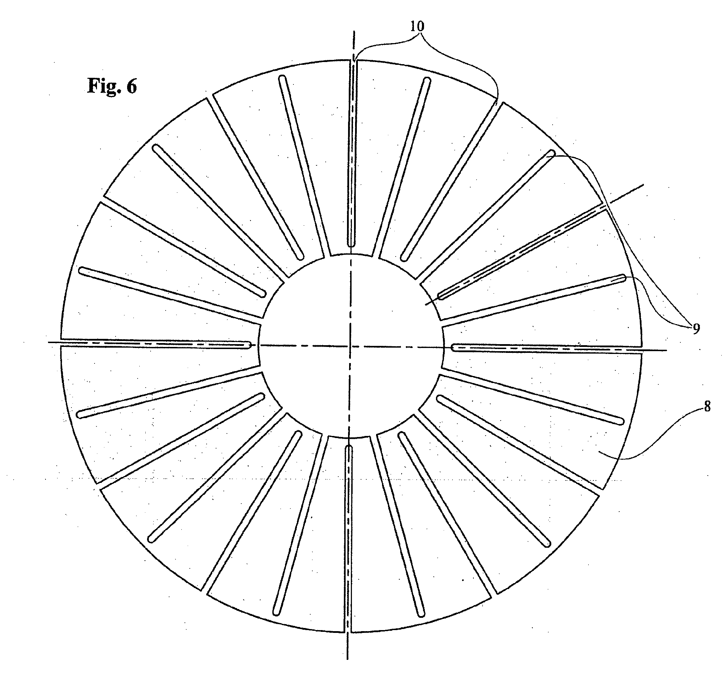

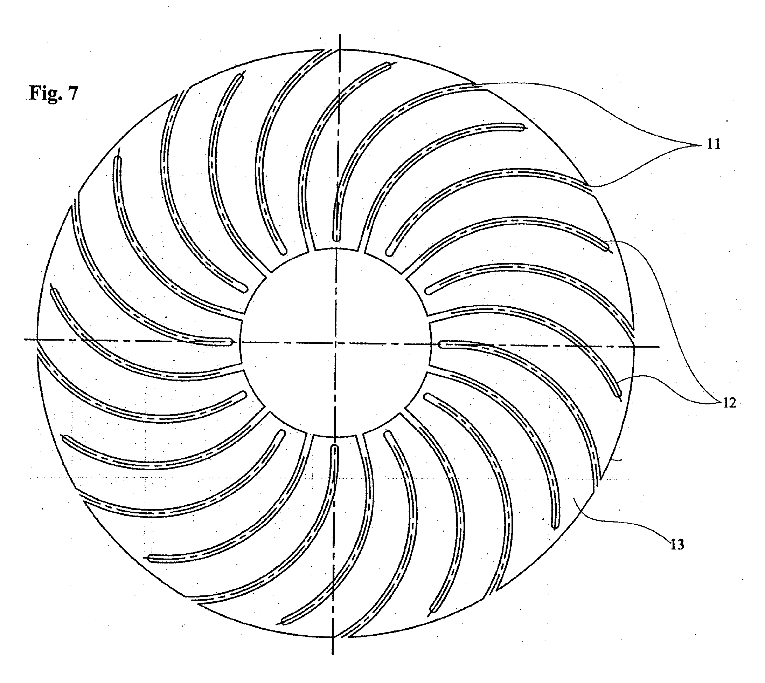

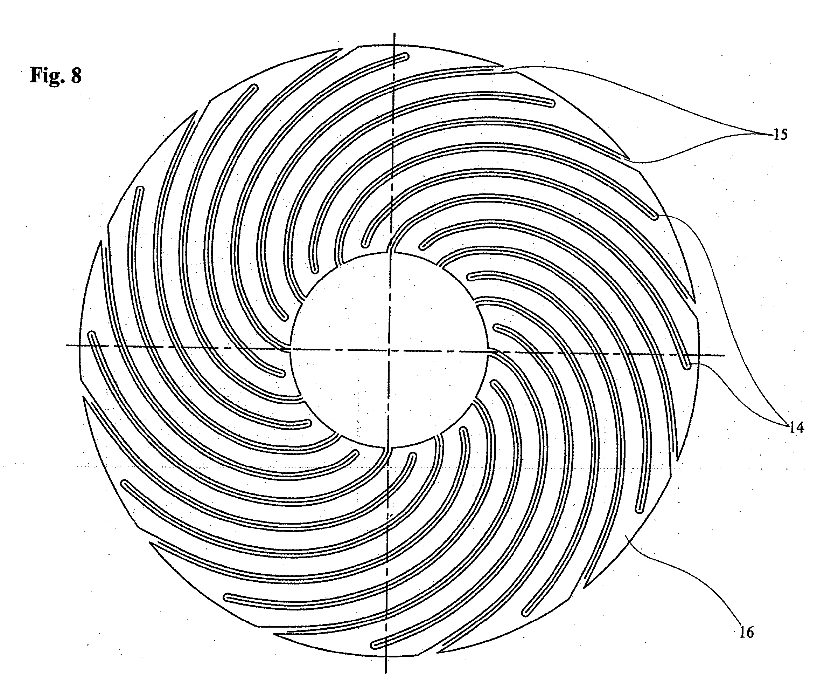

Alternatives to these alternating cuts on the annular ring of the metal foil, visible in fig. 6, either a curved form of fig. 7 or a spiral of fig. 8, are included in the concept of the above-mentioned straight cuts that limit and minimise the surface deformations, and above all render them harmless.

## Claims

1. Thermo plate comprising an upper plate (2), made of porcelain or ceramic and suitable for directly receiving the food to be kept hot, closed at the bottom by a base plate (3) that creates a cavity (4) inside which, on the lower surface of said upper plate (2), is a sheet of metal foil (5) with a high thermal capacity, with said metal foil (5) configured with a shape roughly corresponding to the bottom of the top plate (2) and which has a central hole **characterized in that** it further comprises a series of through-grooves or cuts (9, 10, 14, 15) that start from the central hole and/or from the perimeter edge and which cover almost the whole of the space between the central hole and the perimeter edge.

2. Thermo plate according to claim 1 **characterised by** the fact that said metal foil (5) is at a suitable distance from the top surface of the base plate (3).

3. Thermo plate according to claim 1 or 2 **characterised by** the fact that said base plate (3) is joined to the top part (2) of the thermo plate (1) along the circumference by means of a solder paste (7).

4. Thermo plate according to one or more of the previous claims **characterised by** the fact that said sheet of metal foil (5) covers only the central part of the thermo plate (1) and not its edges.

5. Thermo plate according to one or more of the previous claims **characterised by** the fact that said metal foil sheet can be heated by induction.

6. Thermo plate according to one or more of the previous claims **characterised by** the fact that said metal foil (5) is attached to the bottom of the upper plate (2) only in limited areas.

7. Thermo plate according to one or more of the previous claims **characterised by** the fact that said metal foil (5) is shaped like an annular ring.

8. Thermo plate according to one or more of the previous claims **characterised by** the fact that said metal foil sheet (5) has through-grooves or cuts in an alternating fashion, starting from the centre and starting from the edge.

9. Thermo plate according to one or more of the previous claims **characterised by** the fact that the overall number of through grooves or cuts (9, 10, 14, 15) can vary from 8 to 48.

10. Thermo plate according to one or more of the previous claims **characterised by** the fact that the overall number of through-grooves or cuts (9, 10, 14, 15) is preferably between 16 and 32.

11. Thermo plate according to one or more of the previous claims **characterised by** the fact that the overall number of through-grooves or cuts (9, 10, 14, 15) is even more preferably 24.

12. Thermo plate according to one or more of the previous claims **characterised by** the fact that said through-grooves or cuts (9, 10, 14, 15) have a rectilinear configuration between the central hole and the edge.

13. Thermo plate according to one or more of the previous claims **characterised by** the fact that said through-grooves or cuts (9, 10, 14, 15) have a curved or spiral configuration between the central hole and the edge.

14. Thermo plate according to one or more of the previous claims **characterised by** the fact that said solder paste is a high temperature silicone adhesive with an elasticity modulus that provides stretching of at least 150%.

15. Thermo plate according to one or more of the previous claims **characterised by** the fact that said metal foil sheet (5) is attached to the bottom part of the plate using said above-mentioned solder paste in certain points or in spaced out circles

## Patentansprüche

1. Thermo Platte bestehend aus einer oberen Platte (2), aus Porzellan oder Keramik und geeignet für den direkten Empfang von Speisen die warm gehalten werden, geschlossen an der Unterseite der Basisplatte (3), die einen Hohlraum (4) von innen bildet, auf der unteren Oberfläche des besagten oberen Platte (2), ist ein Blatt mit Metallfolie (5) mit hoher Wärmekapazität, mit genannter Metallfolie (5) konfiguriert in einer Form, die etwa an den unteren Rand der oberen Platte (2) entsprechend ein zentrales Loch hat charakterisiert durch die Tatsache, dass es eine weitere Reihe von durchlassende Rillen oder Schnitte umfasst (9, 10, 14, 15), die vom zentralen Loch starten und/oder vom Perimeter-Rand und die fast den ganzes Raum zwischen dem zentralen Loch und dem Perimeter Rand abdecken.

2. Thermo-Platte gemäß Anspruch 1, **gekennzeichnet durch** die besagte Metallfolie (5) ist in einem geeigneten Abstand zu der oberen Fläche der Bodenplatte (3).

3. Thermo-Platte gemäß Anspruch 1 oder 2 **gekennzeichnet durch** die Tatsache, dass die besagte Basis-platte (3) mit dem Oberen Teil (2) der Thermo-Platte (1) entlang des Umfang mittels einer Lötpaste verbunden ist(7).

4. Thermo-Platte gemäß einem oder mehreren der vorhergehenden Ansprüche **gekennzeichnet durch** die Tatsache, dass besagtes Metallfolien-Blatt (5) nur den zentralen Teil der Thermo-Platte (1) und nicht seine Ränder abdeckt.

5. Thermo-Platte gemäß einem oder mehreren der vorhergehenden Ansprüche, **gekennzeichnet durch** die Tatsache, dass besagtes Metallfolien-Blatt **durch** Induktion erhitzt werden kann.

6. Thermo-Platte gemäß einem oder mehreren der vorhergehenden Ansprüche **gekennzeichnet durch** die Tatsache, dass besagte Metallfolie (5) an der Unterseite der oberen Platte (2) nur in begrenzten Gebieten befestigt ist.

7. Thermo-Platte gemäß einem oder mehreren der vorhergehenden Ansprüche **gekennzeichnet durch** die Tatsache, dass die besagte Metallfolie (5) wie ein Sprengring geformt ist.

8. Thermo-Platte gemäß einem oder mehreren der vorhergehenden Ansprüche **gekennzeichnet durch** die Tatsache, dass besagtes Metallfolien-Blatt (5) durchlassende Rillen oder Schnitte in abwechselnder Reihenfolge besitzt, ausgehend vom Zentrum und vom Rand.

9. Thermo-Platte gemäß einem oder mehreren der vorhergehenden Ansprüche **gekennzeichnet durch** die Tatsache, dass die Gesamtzahl der durchlassenden Rillen oder Schnitte (9, 10, 14, 15) von 8 bis 48 variieren kann.

10. Thermo-Platte gemäß einem oder mehreren der vorhergehenden Ansprüche **gekennzeichnet durch** die Tatsache, dass die Gesamtzahl der durchlassenden Rillen oder Schnitte (9, 10, 14, 15) vorzugsweise zwischen 16 und 32 beträgt.

11. Thermo-Platte gemäß einem oder mehreren der vorhergehenden Ansprüche **gekennzeichnet durch** die Tatsache, dass die Gesamtzahl der durchlassenden Rillen oder Schnitte (9, 10, 14, 15) sogar vorzugsweise eher 24 ist.

12. Thermo-Platte gemäß einem oder mehreren der vorhergehenden Ansprüche **gekennzeichnet durch** die Tatsache, dass die besagten durchlassenden Rillen oder Schnitte (9, 10, 14, 15) eine geradlinige Konfiguration zwischen dem zentralen Loch und dem Rand besitzen.

13. Thermo-Platte gemäß einem oder mehreren der vorhergehenden Ansprüche **gekennzeichnet durch** die Tatsache, dass die besagten durchlassenden Rillen oder Schnitte (9, 10, 14, 15) eine gebogene oder Spiralförmige Konfiguration zwischen dem zentralen Loch und dem Rand besitzen.

14. Thermo-Platte gemäß einem oder mehreren der vorhergehenden Ansprüche **gekennzeichnet durch** die Tatsache, dass besagte Lötpaste ein Hochtemperatur-Silikonkleber mit einem Elastizitätsmodul ist, das mindestens eine Dehnung von 150 % bietet.

15. Thermo-Platte gemäß einem oder mehreren der vorhergehenden Ansprüche **gekennzeichnet durch** die Tatsache, dass das besagte Metallfolien-Blatt (5) an den unteren Teil der Platte befestigt ist, **durch** Nutzung der oben erwähnten Lötpaste an bestimmten Punkten oder in spatiierten Kreisen.

## Revendications

1. Le plat thermique comprend un plat supérieur (2), de porcelaine ou de céramique, adapté à recevoir directement la nourriture à maintenir chaude, fermé au fond par une plaque d'extrémité (3) qui réalise une cavité (4) à l'intérieur de laquelle, sur la superficie inférieure dudit plat supérieur (2) est adossée une lamelle métallique (5) à haute capacité thermique, la dite lamelle métallique étant configurée avec une forme presque correspondante au fond du plat supérieur (2), dotée d'une perforation centrale et **caractérisée par le fait qu'**elle présente une série de rainures à travers ou fentes (9, 10, 14, 15) qui partent de la perforation centrale et/ou du bord du périmètre et qui couvrent presque toute la distance entre la perforation centrale et le bord du périmètre.

2. Le plat thermique selon la revendication 1 **caractérisé par le fait que** ladite lamelle métallique (5) est distancée opportunément de la superficie supérieure de la plaque d'extrémité (3).

3. Le plat thermique selon la revendication 1 ou 2 **caractérisé par le fait que** la dite plaque d'extrémité (3) est unie à la partie supérieure (2) du plat thermique (1) le long de la circonférence au moyen d'une pate soudante (7).

4. Le plat thermique selon une ou plusieurs des revendications précédentes **caractérisé par le fait que** ladite lamelle métallique (5) couvre seulement la partie centrale du plat thermique (19) et non ses bords.

5. Le plat thermique selon une ou plusieurs des revendications précédentes **caractérisé par le fait que** ladite lamelle peut être réchauffée par induction.

6. Le plat thermique selon une ou plusieurs des revendications précédentes **caractérisé par le fait que** ladite lamelle métallique (5) est unie au fond du plat supérieur (2) uniquement en correspondance à des zones limitées.

7. Le plat thermique selon une ou plusieurs des revendications précédentes **caractérisé par le fait que** ladite lamelle métallique (5) a la forme d'une couronne circulaire.

8. Le plat thermique selon une ou plusieurs des revendications précédentes **caractérisé par le fait que** ladite lamelle métallique (5) est couverte de rainures à travers, ou de fentes, qui sont situées de manière alternée en partant du centre et en partant de la périphérie.

9. Le plat thermique selon une ou plusieurs des revendications précédentes **caractérisé par le fait que** le numéro global de ces rainures à travers, ou fentes (9, 10, 14, 15) peut varier de 8 à 48.

10. Le plat thermique selon une ou plusieurs des revendications précédentes **caractérisé par le fait que** le numéro global de ces rainures à travers, ou fentes (9, 10, 14, 15) est compris de préférence entre 16 et 32.

11. Le plat thermique selon une ou plusieurs des revendications précédentes **caractérisé par le fait que** le numéro global de ces rainures à travers, ou fentes (9, 10, 14, 15) est plus préférablement encore de 24.

12. Le plat thermique selon une ou plusieurs des revendications précédentes **caractérisé par le fait que** le lesdites rainures à travers, ou fentes (9, 10, 14, 15) ont une configuration rectiligne entre la perforation centrale et le bord périphérique.

13. Le plat thermique selon une ou plusieurs des revendications précédentes **caractérisé par le fait que** lesdites rainures à travers, ou fentes (9, 10, 14, 15) ont une configuration arquée ou à spirale, entre la perforation centrale et le bord périphérique.

14. Le plat thermique selon une ou plusieurs des revendications précédentes **caractérisé par le fait que** ladite pate soudante est un adhésif de silicone à température élevée avec un coefficient d'élasticité qui consent des allongements d'au moins 150 %.

15. Le plat thermique selon une ou plusieurs des revendications précédentes **caractérisé par le fait que** ladite lamelle métallique (5) est unie à la partie inférieure du plat au moyen de la pate soudante mentionnée ci-dessus par des points ou par des circonférences distancées.
